# EUROPEAN PATENT SPECIFICATION

(11) **EP 2 757 170 B1**
(45) Date of publication and mention of the grant of the patent: **13.06.2018**
(21) Application number: 12831846.6
(22) Date of filing: 14.03.2012
(51) Int. Cl.: C22C 38/00, C22C 38/38, C22C 38/58, C21D 7/13, C21D 9/00, C21D 1/22, C22C 38/02, C22C 38/04, C22C 38/06, C22C 38/22, C22C 38/26, F16C 7/02, C21D 8/00, C21D 1/18

(54) **TRIP-TYPE TWO-PHASE MARTENSITIC STEEL AND ULTRAHIGH-STRENGTH-STEEL PROCESSED ARTICLE OBTAINED THEREFROM**
ZWEIPHASIGER MARTENSITISCHER TRIP-STAHL UND VERARBEITETER ULTRAHOCHFESTER STAHLARTIKEL DARAUS
ACIER MARTENSITIQUE À DEUX PHASES DE TYPE TRIP ET ARTICLE OBTENU À PARTIR DE CELUI-CI ET TRAITÉ AVEC UN ACIER À ULTRA HAUTE RÉSISTANCE

(30) Priority: 15.09.2011 JP 2011201994; 29.02.2012 JP 2012044373
(43) Date of publication of application: 23.07.2014
(73) Proprietor: Usui Kokusai Sangyo Kaisha Ltd., Shizuoka 411-8610 (JP); Shinshu University, Matsumoto-shi, Nagano 390-8621 (JP)
(72) Inventor: SUGIMOTO Koh-ichi, Nagano City Nagano 380-8553 (JP); KOBAYASHI Junya, Nagano City Nagano 380-8553 (JP); YOSHIKAWA Nobuo, Nagano City Nagano 380-8553 (JP); NAKAJIMA Yuji, Nagano City Nagano 380-8553 (JP); TAKAHASHI Teruhisa, Sunto-gun Shizuoka 411-8610 (JP); ARAI Goro, Chino-city Nagano 391-0001 (JP)
(74) Representative: Ipside
(86) International application number: PCT/JP2012/057248
(87) International publication number: WO 2013/038741

(56) References cited:
- EP-A1- 1 149 928
- EP-A1- 2 365 103
- JP-A- 2007 177 271
- JP-A- 2010 280 962
- JP-A- 2011 047 034
- JP-A- 2011 084 813
- JP-A- 2011 184 756
- JP-A- 2011 184 757

## Description

### Technical Field

The present invention relates to an ultrahigh-strength steel having superior notch fatigue strength and fracture toughness and an ultrahigh-strength-steel processed product as well as to a producing method thereof. More particularly, the invention relates to a TRIP-aided dual-phase martensitic steel which is excellent in terms of strength-elongation balance and Charpy impact value and has a matrix phase composed of a soft lath martensitic structure and a hard lath martensitic structure, and an ultrahigh-strength-steel processed product and further an ultrahigh-strength forged product using such steel.

As "the ultrahigh-strength forged product" of the present invention, for example, connecting rod forged products for use in engines are typically proposed, and those products include not only primary forged products, but also all the following products: for example, precise forged products, such as secondary forged products and tertiary forged products, obtained by further subjecting the primary forged products to a forging treatment (such as a cold forging or hot forging treatment), and final products obtained by further processing the forged products into complicated shapes, as well as common rails for use in an acculator-type fuel injection system to be installed in diesel engines.

### Background Art

In general, forged products used in the field of industrial technology such as automobiles, electric appliances, machines, are produced through processes of various forging (machining) treatments having different heating temperatures and then quality-adjusting treatments (heating process), such as quenching and tempering treatments. In the case of automobiles, hot forged products (pressure temperature 1100 to 1300°C) and warm forged products (pressure temperature 600 to 800°C) have been widely used for crank shafts, con-rods, transmission gears, common rails for use in an acculator-type fuel injection system to be installed in diesel engines, and cold forged products (pressurized at normal temperature) have been widely used for pinion gears, toothed gears, steering shafts, valve lifters.

In recent years, in order to achieve light-weight of the chassis of vehicles and ensure collision safety, the application of an ultrahigh-strength low alloy TRIP-aided steel (TBF steel) capable of being molded with a transformation induced plasticity of retained austenite has been examined.

For example, Patent Document 1 discloses a technique relating to a producing method of a high-strength forged product that is superior in terms of elongation and strength-drawability characteristic balance in a high strength range of tensile strength of 600 MPa class or more by adopting a unique heating process that is an austempering process at a predetermined temperature after both of annealing and forging treatments have been carried out at about a two-phase temperature range of ferrite and austenite. Patent Document 2 discloses a technique to produce a high-strength forged product that is superior in terms of elongation and strength-drawability characteristic balance by the separate formation of annealed bainite and martensite to be subjected to both of annealing and forging treatments at about a two-phase temperature range of ferrite and austenite and then performing an austempering process thereon at a predetermined temperature. Patent Document 3 discloses a technique to produce a high-strength forged product having superior stretch flange-ability, while the temperature at the time of the forging process can be lowered, by heating to a two-phase temperature range to perform forging processes at the two phase range and then a predetermined austempering process thereon.

However, when a forged product is produced by these methods, the following problems tend to be raised.

Since the forged product generates heat in accordance with its processing ratio, the temperatures of parts at the time of the forging process tend to be changed depending on the parts. For example, in the case when a forging process is carried out at a high temperature (near Ac₃), the amount of heat generation becomes higher when the processing ratio is high, the mutual aggregation and growth of austenite materials are generated with the result that bulky retained austenite is generated after the heating process, resulting in possible degradation of impact characteristic (this is a problem at the time of a high-temperature forging process). However, in the case when a forging process is carried out at a low temperature (near Ac₁), since a sufficient amount of heat generation is not ensured when the processing rate is low, a large amount of unstable retained austenite is generated, with the result that after the heating process, a hard martensite that forms a starting point of fracture is generated, resulting in possible degradation of the impact characteristic (this is a problem at the time of a low-temperature forging process). Therefore, when the temperatures and processing rates of forged products are varied, partially bulky retained austenite and unstable austenite tend to be easily generated, with the result that it becomes difficult to obtain stable and superior impact resistant properties as the forged product as a whole.

Patent Document 4 discloses a technique to produce a steel-made high-strength processed product with superior impact resistance and a high-pressure fuel pipe (in particular, a fuel-injection pipe and a common rail for use in diesel engines, having high strength and impact resistant characteristic) with superior characteristic balance of elongation and strength-drawability regardless of the forging temperature and forging reduction ratio and with a tensile strength of 600 MPa or more by adopting a heating process in which after an addition of one or more of Nb, Ti and V and an addition of an appropriate amount of Al, both of annealing and forging treatments are performed at about a two-phase temperature range of ferrite and austenite, an austempering process is then carried out at a predetermined temperature.

The invention disclosed in Patent Document 4 is superior in that a remarkable effect can be obtained, which effect is not obtained by the techniques disclosed by Patent Documents 1 to 3, and the resulting ultrahigh-strength low alloy TRIP-aided steel (TBF steel) is expected to greatly devote to achieving light-weight of the chassis of vehicles and ensuring collision safety. However, since the ultrahigh-strength low alloy TRIP-aided steel (TBF steel) has a structure in which fine particle-state bainite ferrite and polygonal ferrite coexist in the matrix together with the lath structure of bainite ferrite, a high hardenability is required in order to obtain complete TBF steel for achieving higher yield strength and tensile strength.

Patent Document 5 discloses a technique capable of producing such ultrahigh-strength low alloy TRIP-aided steel (TBF steel) having a high hardenability, the technique is to obtain a ultrahigh-strength low alloy TRIP-aided steel (TBF steel) having a high hardenability with an excellent strength-toughness balance and with a micro-metallographic structure by allowing an appropriate amount of Cr, Mo and Ni to be contained so as to improve the hardenability as well as allowing Nb, Ti and V to be contained so as to improve strength (fatigue strength) by miniaturizing crystal grains, with the carbon equivalent being set to an appropriate value, and then adopting a predetermined heating process.

The invention disclosed in Patent Document 5 is superior in that the remarkable effect can be obtained, which is not obtained by the technique disclosed by Patent Document 4, however, it cannot be said that the resulting material is sufficient as a new-generation-type high strength material having ultrahigh-strength and high moldability as well as high delayed fracture strength.

In contrast, a low alloy TRIP-aided steel utilizing the transformation induced plasticity (TRIP) of retained austenite has been expected as a new-generation-type high strength material having ultrahigh-strength and high moldability as well as high delayed fracture strength. The technique disclosed in Patent Document 6 relates to an ultrahigh-strength TRIP-aided martensite steel (TM steel) with a martensite matrix, Cr and Mo are combinedly added to improve the hardenability as well as Nb is added to form an ultrahigh-strength steel, with the carbon equivalent except for C-content being set at an appropriate value, a quenching process (Q-process) is carried out and a partitioning process (P-process) is then carried out so that a TRIP-aided martensite steel (TM steel) with a martensite matrix, having ultrahigh-strength and high moldability as well as high delayed fracture strength, can be obtained.

Thus, the TRIP-aided martensite steel (TM steel) disclosed in Patent Document 6 is superior in that the remarkable effect such as ultrahigh-strength, high moldability and high delayed fracture strength, which have not been obtained by Patent Documents 1 to 5, can be obtained; however, in order to obtain a more perfect TM steel as a new-generation-type high strength material, it is necessary to further improve the strength-elongation balance and Charpy impact value in addition to the ultrahigh-strength, high moldability and high delayed fracture strength.

In the prior art, the European patent application No. 1 149 928 A1 is also known. This prior art document discloses a hot dip Zn galvanized steel sheet comprising 0.05-0.25 mass % of C, not more than 2.0 mass % of Si, 1. 1.0-2.5 mass % of Mn, and 0.005-0.10 mass % of Al, wherein a base steel structure includes soft tempered martensite phase and hard fine size martensite phase. The European patent application No. 2 365 103 A1 discloses a high-strength TRIP steel known from prior art.

### Citation List

### Patent Document

PTL 1: Japanese Patent Application Laid-Open No. 2004-292876
PTL 2: Japanese Patent Application Laid-Open No. 2005-120397
PTL 3: Japanese Patent Application Laid-Open No. 2004-285430
PTL 4: Japanese Patent Application Laid-Open No. 2007-231353
PTL 5: Japanese Patent Application Laid-Open No. 2010-106353
PTL 6: Japanese Patent Application Laid-Open No. 2010-280962

### Summary of Invention

### Technical Problem

In view of the above-mentioned circumstances, the present invention has been devised, and its object is to provide a TRIP-aided dual-phase martensitic steel which has a matrix phase with a dual-phase structure composed of a soft lath martensitic structure and a hard lath martensitic structure not depending on forging temperature, forging reduction ratio, or the like, but by controlling, in particular, heat treatment conditions, and is provided with an excellent strength-elongation balance and Charpy impact value, and forged products made of such ultrahigh-strength steel.

### Solution to Problems

The invention is defined by the subject-matter of the appended claims. In order to realize a TRIP-aided dual-phase martensitic steel which is provided with a matrix phase having a dual-phase structure composed of a soft lath martensitic structure and a hard lath martensitic structure not depending on forging temperature, forging reduction ratio, or the like but by appropriately controlling heat treatment conditions in addition to controls of added amounts of components of chemical compositions, and exerts an excellent strength-elongation balance and Charpy impact value, and also to achieve processed products made of such ultrahigh-strength steel and ultrahigh-strength forged products, as well as achieving a production method for such products, the inventors have examined a TRIP-aided martensitic steel (TM steel) with ultrahigh-strength, with respect to its heating process in the γ-range and isothermal transformation process (IT-process) and partitioning process (P-process) carried out thereafter, together with the resulting effects exerted to the microstructure and machining characteristics of the TM steel, by using practical experiments.

As a result, the inventors have found that by carrying out an isothermal transformation process (IT-process) after a heating process in the γ-range and partitioning process (P-process) thereafter, a matrix phase with a dual-phase structure composed of a soft lath martensitic structure and a hard lath martensitic structure is formed so that the structure can be miniaturized and stabilized and thereby it becomes possible to obtain a TRIP-aided dual-phase martensitic steel having an excellent strength-elongation balance and Charpy impact value.

That is, the TRIP-aided dual-phase martensitic steel of the present invention, which contains 0.1-0.7%C, 0.5-2.5%Si, 0.5-3.0%Mn, 0.5-2.0%Cr, 0.5% or less (including 0%) of Mo, 0.04-2.5%Al, and the balance Fe with incidental impurities, has a metallographic structure in which a matrix phase is composed of a soft lath martensitic structure and a hard lath martensitic structure, and is obtained by processes in which its raw steel material is heated to the γ-range, and the heated steel material is rapidly cooled to a temperature slightly above a martensite transformation starting temperature (Ms), and the cooled material is then subjected to an isothermal transformation process (IT-process) in a temperature range of Mf to [(Mf)-100°C].

The TRIP-aided dual-phase martensitic steel having an excellent strength-elongation balance and Charpy impact value further contains other elements 2.0% or less (including 0%) of Ni, 0.2% or less of Nb, 0.005% or less of B (including 0%) and 0.05% or less (including 0%) of Ti.

The TRIP-aided dual-phase martensitic steel according to the present invention is obtained by further carrying out a partitioning process (P-process) after the isothermal transformation process.

The TRIP-aided dual-phase martensitic steel according to the present invention is obtained by, after the heating treatment to the γ-range, carrying out a plastic-working process at that temperature range.

An ultrahigh-strength steel processed product that is made of the TRIP-aided dual-phase martensitic steel having an excellent strength-elongation balance and Charpy impact value may include forged products. The processed products may also include connecting rods for use in engines, isokinetic joints, common rails for use in diesel engines.

### Advantageous Effects of Invention

According to the present invention, by carrying out an isothermal transformation process (IT-process) after a heating treatment to the γ-range as a heating treatment condition so as to improve the strength-elongation balance and Charpy impact value, a micro-metallographic structure having a matrix phase composed of a soft lath martensitic structure and a hard lath martensitic structure is obtained; by carrying out a partitioning process (P-process) after the isothermal transformation process (IT-process), the carbon concentration can be raised to the same degree as that of a quenching process (Q-process) and partitioning process (P-process); and after the heating treatment to the γ-range, by carrying out a plastic-working process (hot working) at the temperature range, the amount of retained austenite can be increased, so that it becomes possible to obtain a TRIP-aided dual-phase martensitic steel having a superior strength-elongation balance and Charpy impact value. Moreover, using the TRIP-aided dual-phase martensitic steel allows to provide an ultrahigh-strength steel processed product and an ultrahigh-strength forged product having a superior strength-elongation balance and Charpy impact value, without the necessity of regulating heating temperatures and reduction ratios (such as forging reduction ratio and rolling reduction ratio), and without raising any problems at the high-temperature forging time and low-temperature forging time.

### Brief Description of Drawings

Figure 1 is a schematic view showing a characteristic structure of a TRIP-aided dual-phase martensitic steel according to the present invention.
Figure 2 is an explanatory view showing a heating treatment process of the TRIP-aided dual-phase martensitic steel according to the present invention.
Figure 3 is a view showing the retained γ-amount of a sample steel of steel type A in Table 1 according to example 1 of the present invention in comparison with that of a conventional steel.
Figure 4 is a view showing the carbon concentration of the sample steel of steel type A in Table 1 according to example 1 of the present invention in comparison with that of a conventional steel.
Figure 5 is a view showing the strength-elongation balance of the sample steel of steel type A in Table 1 according to example 1 of the present invention in comparison with that of a conventional steel.
Figure 6 is a view showing the Charpy impact value of the sample steel of steel type A according to Table 1 of example 1 of the present invention in comparison with that of a conventional steel.
Figure 7 is a view showing the hardness of the sample steel of steel type A in Table 1 according to example 1 of the present invention in comparison with that of a conventional steel.
Figure 8 is a view showing a metallographic structure (microscopic photograph) of a heat-treated material (IT-treated material) of the sample steel of steel type A in example 1 heating treated material the present invention.
Figure 9 is a view showing the retained γ-amount of each sample steel of steel type B (example 2) and steel type A (example 3) in Table 1 according to examples 2 and 3 of the present invention.
Figure 10 is a view showing the carbon concentration of each sample steel of steel type B (example 2) and steel type A (example 3) in Table 1 according to examples 2 and 3 of the present invention.
Figure 11 is a view showing the strength-elongation balance of each sample steel of steel type B (example 2) and steel type A (example 3) in Table 1 according to examples 2 and 3 of the present invention.
Figure 12 is a view showing the Charpy impact value of each sample steel of steel type B (example 2) and steel type A (example 3) in Table 1 according to examples 2 and 3 of the present invention.
Figure 13 is a view showing the hardness of each sample steel of steel type B (example 2) and steel type A (example 3) in Table 1 according to examples 2 and 3 of the present invention.

### Description of Embodiments

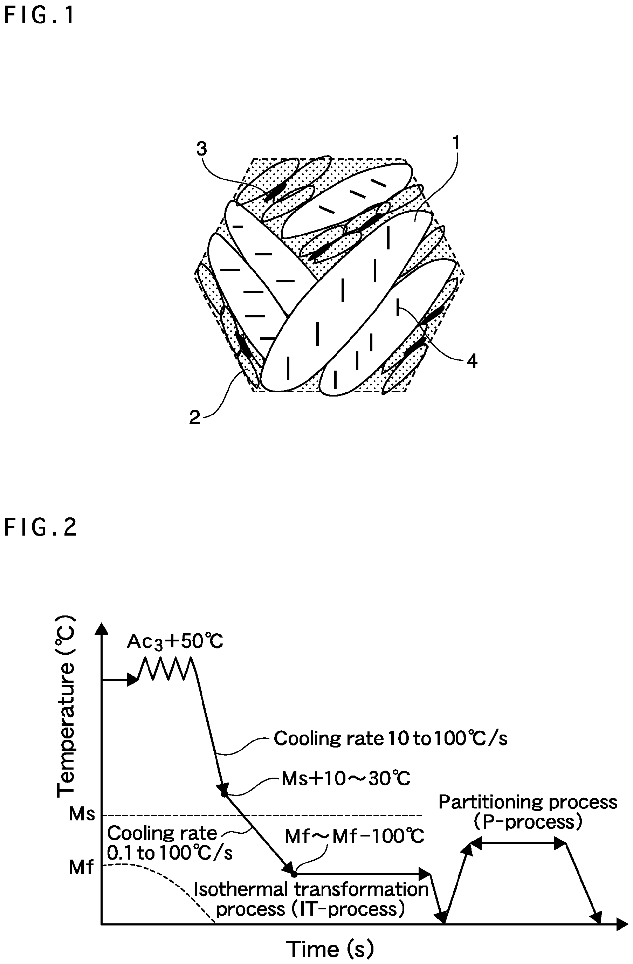

The TRIP-aided dual-phase martensitic steel of the present invention has a metallographic structure with a matrix phase composed of a soft lath martensitic structure and a hard lath martensitic structure, as described above. More specifically, as shown in Fig. 1, in the characteristic structure (dual-phase martensitic structure), the matrix phase structure is composed of bulky soft martensite 1 having a relatively large lath width and fine hard martensite 2 having an extremely small lath width. In this case, the -soft lath-martensite 1 has a low carbon concentration with a trace amount of carbides (cementite 4 or the like) contained therein. The low carbon concentration is derived from the fact that during a cooling process or an isothermal transformation process (IT-process) after an austenite-forming process, carbon is partitioned into the retained austenite phase (y-phase), and its amount of carbides is 50% or less of carbides in a general low alloy martensite steel. In contrast, the hard lath-martensite steel 2 has a very high carbon concentration, and the retained austenite 3 exists in the lath border. The hard lath-martensite 2 exists in the inter-granule portion and grains of the previous austenite.

As such, having a matrix phase composed of a dual-phase structure of the soft lath-martensite structure and the hard lath-martensite allows to obtain effects for miniaturizing the structure and for reducing the fracture unit, and also to achieve functions and effects for allowing the soft lath-martensite to generate an inner stress for compression (function for preventing cracks from occurring and propagating), and for miniaturizing and stabilizing the retained austenite.

With respect to volume fraction of the metallographic structure of the steel according to the present invention, the volume fraction of the soft lath-martensite forming the matrix phase structure is set to 30 to 85%, and the volume fraction of the hard lath-martensite is set to 10 to 70%. These definitions are set because of the reasons described below.

### • Matrix phase structure: Volume fraction of soft lath-martensite of 30 to 85%, Volume fraction of hard lath-martensite of 10 to 70%

In order to obtain a TRIP-aided dual-phase martensitic steel having a superior strength-elongation balance and Charpy impact value, it is necessary to set the volume fraction of the soft lath-martensite to 30 to 85% and also to set the volume fraction of the hard lath-martensite to 10 to 70%. This is because, in the case of less than 30% of the volume fraction of the soft lath-martensite, the resulting steel becomes brittle although its strength becomes high, while in the case of over 85%, the strength is seriously lowered. As for the volume fraction of the hard lath-martensite, in the case of less than 10%, the effect for making the fracture unit smaller is not obtained sufficiently, while in the case of over 70%, the resulting steel becomes brittle.

The TRIP-aided dual-phase martensitic steel of the present invention has the soft lath-martensite and the hard lath-martensite as its matrix phase structure as described above, and further contains the retained austenite and ferrite as its metallographic structure serving as a second phase structure. In this second-phase structure, the retained austenite is effective for improving the total elongation and is also effective for improving the impact resistant property because it exerts a crack resistance because of the martensitic transformation induced plasticity; however, in the case when the volume fraction of the retained austenite exceeds 10%, the C-concentration in the retained austenite is lowered to cause unstable retained austenite, failing to exert the above-mentioned effect sufficiently; therefore, the volume fraction of the retained austenite is set to 1% or more to 10% or less. Additionally, the volume fraction of ferrite is preferably set to 5% or less (including 0%) so as to maintain high tensile strength.

Moreover, in the present invention, to ensure the formation of the metallographic structure and also to effectively enhance the mechanical characteristics, such as strength-elongation balance, Charpy impact value, the main components of the TRIP-aided dual-phase martensitic steel are preferably controlled in the following manner.

### • C: 0.1 to 0.7%

Carbon (C) is an essential element so as to maintain high strength and ensure the retained austenite. More specifically, by ensuring C in the austenite, the retained austenite is allowed to remain stably even at room temperature so as to effectively enhance the elongation property and impact resistant property; however, in the case when it is less than 0.1%, the effects cannot be obtained sufficiently, while in the case when the amount of addition thereof is increased, since the amount of the retained austenite increases, and since C is easily partitioned into the retained austenite, high elongation and shock resistant property can be obtained. However, in the case when it exceeds 0.7%, not only the effects are saturated, but also defects occur due to centralized segregation or the like, with the result that the shock resistant property deteriorates; therefore, the upper limit is regulated to 0.7%.

### • Si: 0.5 to 2.5%

An added amount of Si is set to 2.5% or less since Si is an oxide generation element and the shock resistant property thus deteriorates when it is contained excessively.

### • Mn: 0.5 to 3.0%

Mn is an element required for stabilizing austenite and for obtaining a predetermined amount of retained austenite. In order to effectively obtain these functions, the added amount thereof is preferably set to 0.5% or more (more preferably, to 0.7% or more, most preferably, to 1% or more). However, an excessive addition thereof tends to cause adverse effects, such as occurrence of cracks in the forged pieces, and it is thus set to 3.0% or less.

### • Cr: 0.5 to 2.0%

Cr is an element that is effectively utilized as a strengthening element of steel, and is not only an effective element for use in stabilizing the retained austenite and ensuring a predetermined amount thereof, but also an element for effectively improving a hardenability of steel. To effectively exert the hardenability, its content needs to be set to 0.5% or more, while when its content exceeds 2.0%, the hardenability becomes too high. Therefore, the upper limit thereof is set to 2.0%.

### • Mo: 0.5% or less (including 0%)

Mo is also an element that is effectively utilized as a strengthening element of steel in the same manner as in Cr, and is not only an effective element for use in stabilizing the retained austenite and ensuring a predetermined amount thereof, but also an element for effectively improving a hardenability of steel, and its content is preferably set to 0.5% or less so as to allow it to exert an improving effect for the hardenability.

### • Nb: 0.2% or less

Nb is contained therein so as to further miniaturize crystal grains. Thus, by carrying out a partitioning process (tempering) at the predetermined temperature after carrying out both of an annealing process and further a plastic-working process such as forging at temperatures within an austenite single phase and nearly dual-phases of ferrite and austenite, it is possible to easily ensure the above-mentioned metallographic structure and consequently desired characteristics.

### • Al: 0.04 to 2.5%

A1 is an element that suppresses the deposition of carbides in the same manner as in Si, and since Al exerts a stronger ferrite stabilizing capability than that of Si, the start of transformation becomes earlier in the case of Al addition, in comparison with that in the case of Si addition, so that C is more easily partitioned into austenite even in a holding process (such as forging) in an extremely short period of time. For this reason, in the case of the Al addition, it is possible to further stabilize the austenite, and consequently to shift the C-concentration distribution of the generated austenite toward the high-concentration side, and the amount of the retained austenite thus generated is increased so that a high impact resistant characteristic can be obtained. However, in the case of a trace amount of less than 0.04%, the effects cannot be obtained sufficiently, while in the case of the addition exceeding 2.5%, the Ac₃ transformation point of steel is raised to cause adverse effects in actual operations so that the upper limit is regulated to 2.5%.

### • Ni: 2.0% or less (including 0%)

In the same manner as in Cr and Mo as above, Ni is also an element that is effectively utilized as a strengthening element for steel, and is not only an effective element for use in stabilizing the retained austenite and ensuring a predetermined amount thereof, but also an element for effectively improving a hardenability of steel, and its content is preferably set to 2.0% or less so as to obtain an improving effect for the hardenability.

### • B: 0.005% or less (including 0%)

In the same manner as in Cr and Mo, B is also an element that is effectively utilized for improving the hardenability of steel, and also has an effect for preventing the carbon concentration of the retained austenite from being lowered. Moreover, its content is preferably set to 0.005% or less so as to enhance the hardenability without causing a reduction of the delayed fracture strength, and thus to cut costs.

### • Ti: 0.05% or less (including 0%)

In the same manner as in Nb, Ti is preferably contained therein so as to further miniaturize crystal grains.

Then, the TRIP-aided dual-phase martensitic steel of the present invention, which is excellent in terms of strength-elongation balance and Charpy impact value, is obtained through processes in which, after a raw steel material that satisfies the above-mentioned composition of components has been heated up to the γ-range, the resulting steel material is rapidly cooled to a temperature slightly higher than a martensite transformation starting temperature (Ms), and is then subjected to an isothermal transformation process (IT-process) in a temperature range of Mf to [(Mf)-100°C]. The heating treatment conditions will be discussed as follows.

The heating treatment for obtaining the TRIP-aided dual-phase martensitic steel of the present invention that is excellent in terms of strength-elongation balance and Charpy impact value is characterized by processes in which, as shown in Fig. 2, after heating a raw steel material satisfying the above-mentioned composition to the γ-range (for example, Ac₃ + 50°C), the resulting steel material is rapidly cooled to a temperature MS + 10 to 30°C slightly higher than a martensite transformation starting temperature (Ms) at a cooling rate of 10 to 100°C /s, and is then cooled to a temperature range of Mf to [(Mf)-100°C] (for example, 200°C) at a cooling rate of 0.1 to 100°C/s so that an isothermal transformation process (IT-process) is carried out at that temperature. In this case, although not particularly limited, the isothermal transformation process time is preferably set to approximately 100 to 10000 seconds.

That is, according to the present invention, after heating the raw steel material satisfying the above-mentioned component composition to the γ-range (for example, 950°C) and then rapidly cooling to a temperature (for example, 430°C) slightly above a martensite transformation starting temperature (Ms), the resulting steel material is subjected to the isothermal transformation process (IT-process) in a temperature range of Mf to [(Mf)-100°C]. At this time, the cooling rate from the γ-range to the temperature slightly higher than Ms is set to an average cooling rate of 10°C/s or more in order to suppress the generation of ferrite and perlite.

When the isothermal transformation process (IT-process) is carried out in a temperature range of Mf to [(Mf)-100°C] after the rapid cooling process from the γ-range to the temperature slightly higher than Ms, the first martensite transformation is interrupted. At the time of the isothermal transformation process, carbon is discharged from the martensite first transformed, that is, from the soft martensite, to the remaining austenite so that carbon is partitioned. Thereafter, at the time of cooling to room temperature, most of austenite is transformed to a martensite having a high carbon concentration, that is, a hard martensite, with a small amount of retained austenite being left. Moreover, at the isothermal transformation temperature of slightly below Mf, much amount of austenite exists and both of the phases of the hard martensite amount and the retained austenite amount increase. Additionally, in the case when the amount of Cr, Mo, and Ni serving as the hardenability improving element is increased, since the amount of austenite at the time of the isothermal transformation increases, both of the phases of the hard martensite amount of the retained austenite amount (γ-amount) further increase.

Accordingly to the heating process conditions of the present invention, carrying out the isothermal transformation process (IT-process) in a temperature range of Mf to [(Mf)-100°C] after the rapid cooling process allows the retained γ amount to be increased by about two times as much as that of a conventional QP process (quenching and partitioning process). Moreover, carrying out a partitioning process (P-process) after the isothermal transformation process (IT-process) allows the carbon concentration to be raised to the same level as that of the Q-process. This partitioning process is generally carried out by holding the system, for example, at a temperature of 200 to 400°C for 200 to 10000 seconds. Here, the partitioning process time is regulated to 200 to 10000 seconds because the treatment time of less than 200 seconds fails to sufficiently partition carbon into the retained austenite, and because on the other hand, the treatment time exceeding 10000 seconds causes the retained austenite to be decomposed to cementite and ferrite.

Additionally, in the present invention, by heating the raw steel material that satisfies the above-mentioned component composition to the γ-range (for example, 950°C) to be subjected to a plastic-working process (hot working), the amount of the retained austenite can be further increased. The plastic-working process is exemplified by forging, extruding, perforating, or pipe-elongating by the use of roll-molding, but the conditions of these processes are not particularly limited, and generally-used methods may be adopted. The raw steel material is exemplified by billets or hot-rolled round rods, and any material prepared by processing in a such manner that steel satisfying target components is fused into slabs by using a well-known method and then processed in the heated state as it is, or then once cooled to room temperature and again heated to be subjected to a hot working, may be used.

### Examples

The following description will explain the present invention more specifically based upon examples. However, the present invention is not intended to be limited by the following examples, and modifications and adaptations made therein within a scope not departing from the gist of the present invention are all included within a technical scope of the present invention.

### Example 1

A sample steel slab (the unit used in Table 1 is mass%, with the balance Fe and incidental impurities) of steel-type A having a component composition shown in Table 1 was produced by a continuous forging process, and the slab was again heated to a range of 1250°C, subjected to a hot-rolling process and washed with acid and then subjected to a machining process so that a forging test piece made of a rectangular steel rod having a thickness of 20 mm, a length of 80 mm and a width of 32 mm was produced from a steel rod having a diameter of 32 mm and a length of 80 mm. Then the test piece was heated at 950°C for one second or more, subjected to a forging process, and cooled to 430°C at an average cooling rate of 20°C/s, and then further cooled to an isothermal transformation process temperature shown in Table 2 at an average cooling rate of 20°C/s. At this temperature, an isothermal transformation process (IT-process) was carried out thereon, and the resulting test piece was then cooled to room temperature. Thereafter, a partitioning process (P-process: held at 200 to 400°C for 1000 seconds) was carried out under conditions shown in Table 2.

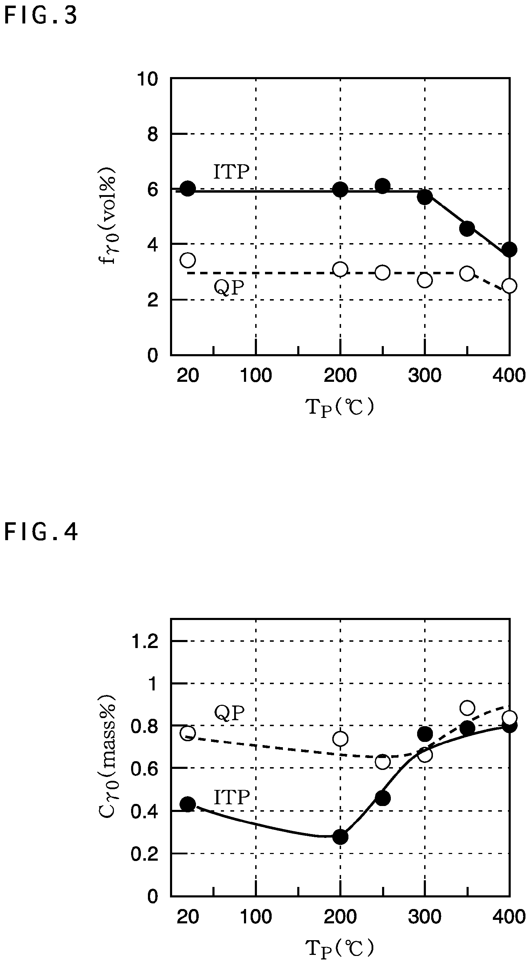

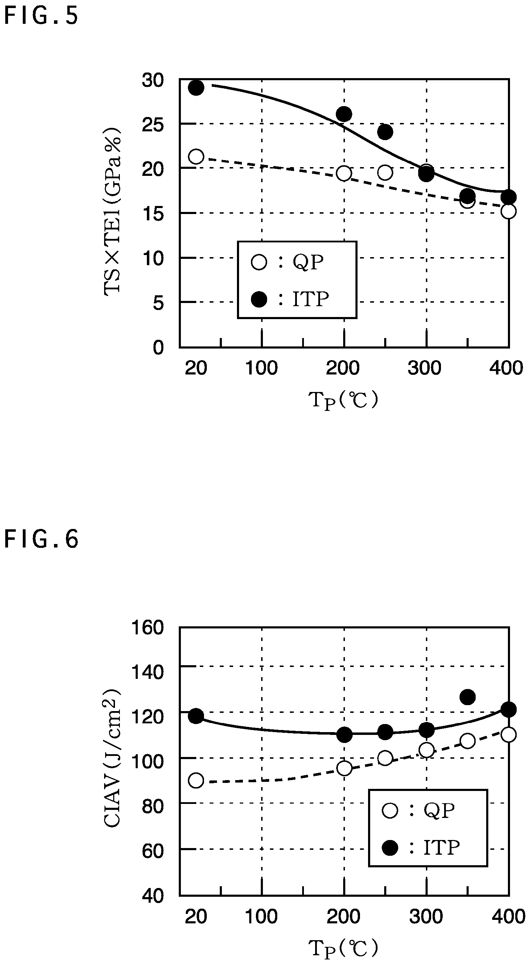

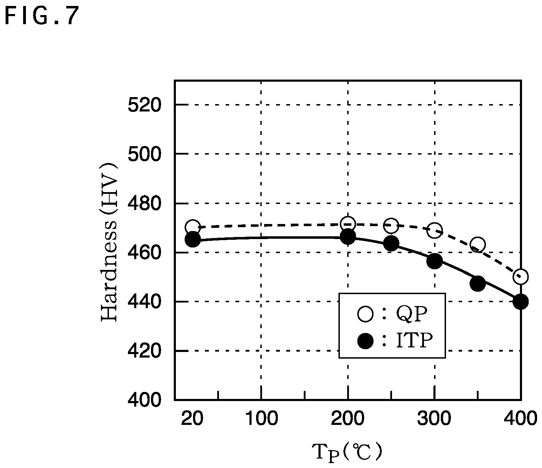

Each of the thus obtained forged members of the steel (example 1) of the present invention was measured for its retained γ amount (f_{γ0}), carbon concentration C_{γ0}), strength-elongation balance TSxTEl) and Charpy impact absorbing value (CIAV) in the following procedures, and its hardness was also measured so that the resulting measured values were compared with those of a conventional steel (quenching process (Q-process)-partitioning process (P-process)) obtained without carrying out any isothermal transformation process (IT-process) thereon, and the results are shown in Table 2, Fig. 3 (retained γ amount (f_{γ0})), Fig. 4 (C_{γ0}),Fig. 5 (TSxTEl), Fig. 6 (CIAV) and Fig. 7 (hardness), respectively.

### • Measurements of Tensile Strength (TS) and Elongation (El):

By using each of JIS14B test pieces (length of a parallel portion: 20 mm, width: 6 mm, thickness: 1.2 mm) obtained from the above-mentioned forged members, the tensile strength (TS) and elongation (El) were measured. Additionally, the test conditions were 25°C and cross-head rate of 1 mm/min.

### • Charpy Impact Test:

By using each of JIS5B test pieces (width: 2.5 mm) obtained from the forged members, the Charpy impact absorbing value CIAV was measured. Additionally, the test conditions were 25°C and 5 m/s.

### • Retained Austenite γ_{R} Characteristic:

An initial volume fraction (f_{γ0}) of the retained austenite and an initial carbon concentration (C_{γ0}) of the retained austenite of each of the heat-treated members were measured by the following X-ray diffraction method.

### NOTE

### <Retained austenite initial volume fraction (f_{γ0})>

### 5-peak method (200) γ, (220) γ, (311) γ (200)α, (211)α

### <Retained austenite initial carbon concentration (C_{γ0})>

Measurements of γ-grating constants from diffraction plane peaks of (200) γ, (220) γ and (311) γ C_{γ}= (a_{γ}- 3.578 - 0.00 0Si_{γ}- 0.0009 5Mn_{γ}-0.0006Cr_{γ} - 0.0056Al_{γ}- 0.0051Nb_{γ}- 0.0220N_{γ})/0.033

### • Observation of structure:

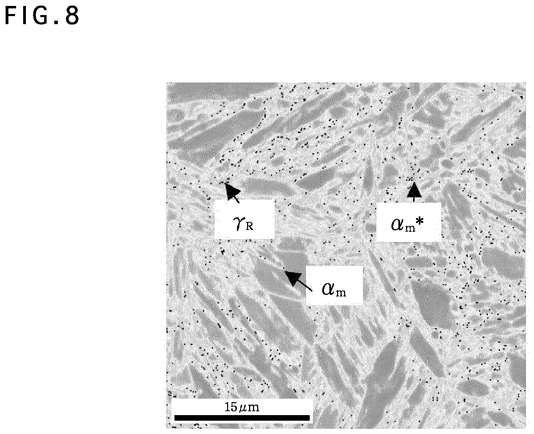

The volume fractions (space factor) of the structures of each of the forged members were structure-analyzed by the following methods: observations of the test piece by an optical microscope (magnification: 400 times or 1000 times) by the use of nital corrosion and a scanning-type electron microscope (SEM: magnification: 1000 times or 4000 times), measurements of the amount of retained austenite by an X-ray diffraction method, measurements of C-concentration in austenite by the use of X-rays, and structure analyses by using a transmission-type electron microscope (TEM: magnification: 10000 times) and FE/SEM-EBSP with a step interval of 100 nm; thus, the structures were identified. The volume fractions of the structures examined for each of the forged members obtained in this manner are also shown in Table 2. Moreover, the metallographic structures (microscopic photographs) after the high-temperature forging heat-treatment are shown in Fig. 8 (orange color represents soft lath martensite phase (αₘ), yellowish green color represents (hard lath martensite phase (αₘ*), and black dots represents retained γ phase (γ_{R})).

The results from Table 2 clearly show that the steel (TRIP-aided dual-phase martensite steel) according to example 1 of the present invention makes it possible to increase the retained γ-amount by two times as much as that of a conventional steel and also to enhance the carbon concentration as high as that of the conventional steel so that both of the strength-elongation balance and Charpy impact value can be improved in comparison with the conventional steel. The hardness thereof is about the same level as that of the conventional steel. In this case, the Charpy impact values of examined SCM420 and SNCM 420 are 70 to 80 J/cm² at maximum.

Based upon these results, the following consideration is given.

Example 1 shows a forged product produced by using a heating process prescribed by the present invention. As shown in Fig. 8, this steel type of steel according to the present invention has a metallographic structure (microscopic photograph) in which its matrix phase is composed of a soft lath martensitic structure and a hard lath martensitic structure so that it is found that the retained austenite is miniaturized and stabilized. Moreover, the steel of the present invention makes it possible to further increase the retained γ-amount by heating its raw steel material to the γ range and then forging it (plastic-working process) at the same temperature. In particular, it is experimentally proved that this effect is further enhanced in a range having a low cooling rate. Furthermore, a forged product made of the steel of the present invention has a significantly high strength-elongation balance and also has an excellent impact resistant characteristic (see Fig. 5 and 6). The superior strength-elongation balance and impact resistant characteristic in the steel of the present invention are considered to be derived from the fact that the matrix phase structure is composed of the soft lath martensitic structure and hard lath martensitic structure by the isothermal transformation process (IT-process) after the quenching process, and the succeeding partitioning process (P-process) carried out thereon so that the structure is miniaturized and stabilized.

In contrast, a conventional steel, which is obtained without satisfying the specific heating process conditions according to the present invention, that is, without carrying out any isothermal transformation process (IT-process) after a rapid cooling process and any succeeding partitioning process (P-process), has a low retained γ-amount and is poor in the miniaturization of its matrix phase structure and stabilization, with the result that its strength-elongation balance and impact value are lowered.

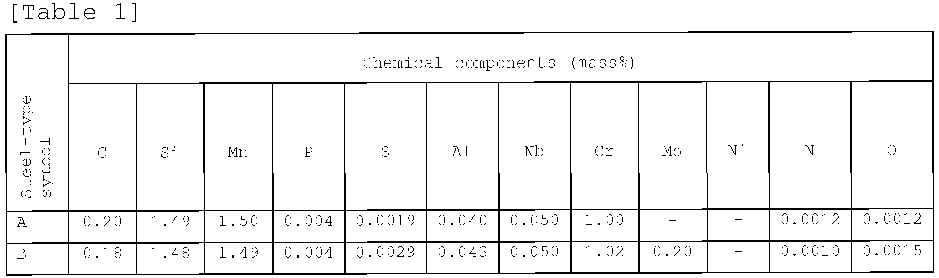

**[Table 2]**

| | Production condition | | | | | Volume fraction of structure | carbon concent ration in Retaine d γ | Mechanical characteristics | | | | | | | Eva lua tio n |
|---|---|---|---|---|---|---|---|---|---|---|---|---|---|---|---|
| | Forgin g temper ature (°C) | Isothermal transformation process | | Partitioning process | | Retaine d γ (%) | C_{γo}, (%) | Tensile strengt h TS (MPa) | Yield strength YS (MPa) | Total elongatio n TEl (%) | Uniform elongat ion UEl (%) | Streng thelonga tion balanc e TSxTEl (GPa%) | Charpy impact absorbi ng value CIAV (J/cm²) | Hard ness (HV) | |
| | | Temperat ure (°C) | Time (Sec) | Temper ature (°C) | Time (Sec ) | | | | | | | | | | |
| Example 1-Steel type A (IT-process) | 950 | 200 | 1000 | - | - | 6.0 | 0.43 | 1502 | 1085 | 19.3 | 9.6 | 29 | 118 | 465 | o |
| | 950 | 200 | 1000 | 200 | 1000 | 6.0 | 0.28 | 1526 | 1120 | 17.0 | 9.2 | 26 | 110 | 466 | o |
| | 950 | 200 | 1000 | 250 | 1000 | 6. 1 | 0.46 | 1448 | 1180 | 16.6 | 8.4 | 24 | 111 | 463 | o |
| | 950 | 200 | 1000 | 300 | 1000 | 5.8 | 0.77 | 1437 | 1195 | 13.5 | 5.7 | 19 | 112 | 456 | o |
| | 950 | 200 | 1000 | 350 | 1000 | 4.4 | 0.78 | 1407 | 1203 | 12.0 | 4.5 | 17 | 125 | 447 | o |
| | 950 | 200 | 1000 | 400 | 1000 | 3.8 | 0.80 | 1381 | 1135 | 12.3 | 4.8 | 17 | 122 | 441 | o |
| Convention al steel (without IT-process) | 950 | - | - | - | - | 3.5 | 0.77 | 1506 | 1111 | 14.1 | 6.8 | 21 | 90 | 470 | |
| | 950 | - | - | 200 | 1000 | 3.3 | 0.74 | 1502 | 1197 | 12.9 | 5.6 | 19 | 96 | 472 | |
| | 950 | - | - | 250 | 1000 | 3.0 | 0.63 | 1474 | 1219 | 13.2 | 5.9 | 19 | 100 | 470 | |
| | 950 | - | - | 300 | 1000 | 2.7 | 0.66 | 1420 | 1211 | 13.8 | 4.7 | 19 | 101 | 469 | |
| | 950 | - | - | 350 | 1000 | 3.0 | 0.90 | 1404 | 1241 | 11.6 | 4.2 | 16 | 107 | 463 | |
| | 950 | - | - | 400 | 1000 | 2.5 | 0.83 | 1344 | 1203 | 11.3 | 3.9 | 15 | 110 | 450 | |

| | | | | | | | | | | | | | | | |
|---|---|---|---|---|---|---|---|---|---|---|---|---|---|---|---|
| Evaluation: O: excellent : not so bad | | | | | | | | | | | | | | | |

### Example 2

The example 2 examined respective characteristics in the case when the isothermal transformation process temperature (IT-process temperature) was changed, and a sample steel slab (the unit used in Table 1 is mass%, with the balance Fe and incidental impurities) of steel-type B having a component composition shown in Table 1 was produced by a continuous forging process, and the slab was again heated to a range of 1250°C, subjected to a hot-rolling process, and washed with acid, and then subjected to a machining process so that a forging test piece made of a rectangular steel rod having a thickness of 20 mm, a length of 80 mm and a width of 32 mm was produced from a steel rod having a diameter of 32 mm and a length of 80 mm. Then, the test piece was heated at 950°C for one second or more, and subjected to a forging process, and cooled to 430°C at an average cooling rate of 20°C/s, and then further cooled to an isothermal transformation process temperature shown in Table 3 at an average cooling rate of 20°C/s. At this temperature, an isothermal transformation process (IT-process) was carried out thereon, and the resulting test piece was then cooled to room temperature (without any partitioning process (P-process).

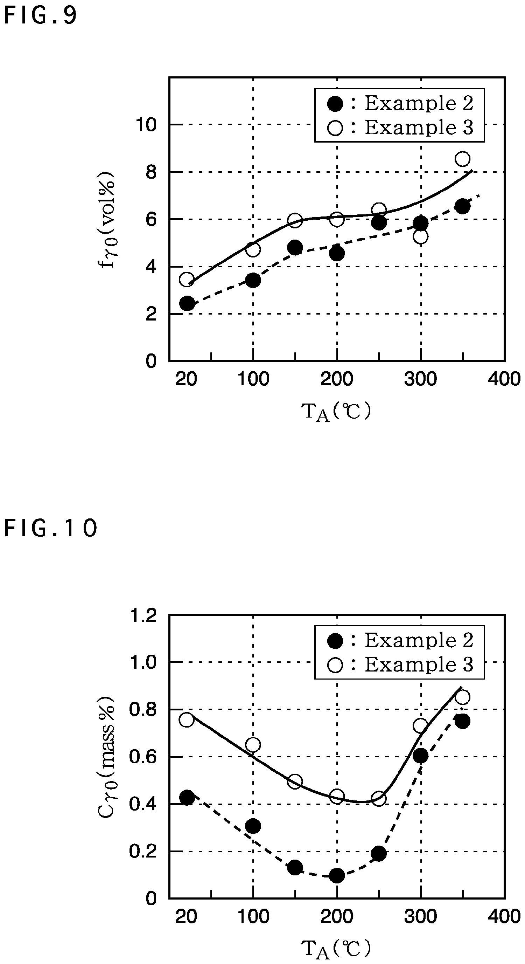

Each of the thus obtained forged members of the steel (example 2) according to the present invention was measured for its retained γ amount (f_{γ0}), carbon concentration (C_{γ0}), strength-elongation balance (TSxTEl) and Charpy impact absorbing value (CIAV) in the following procedures in the same manner as in example 1, and its hardness was also measured so that the resulting measured values are shown in Table 3, and Figs. 9 to 13, respectively.

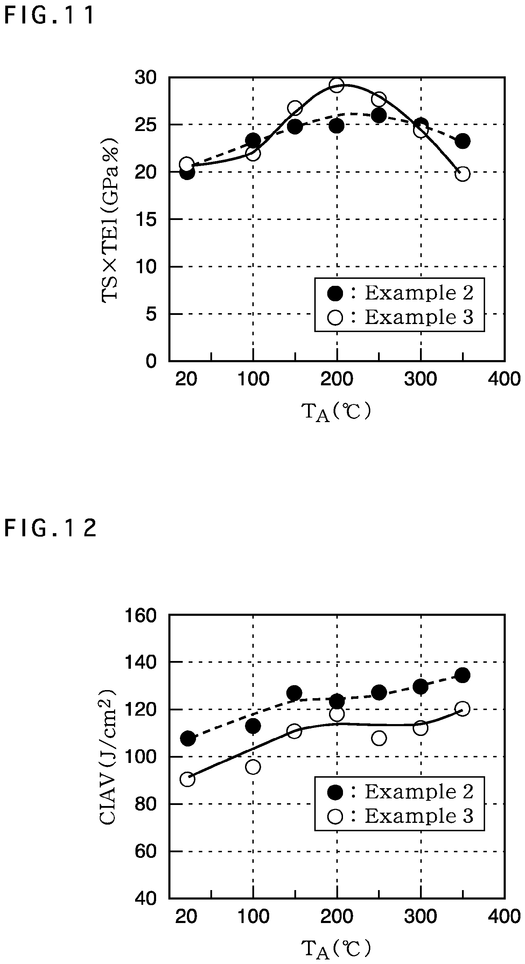

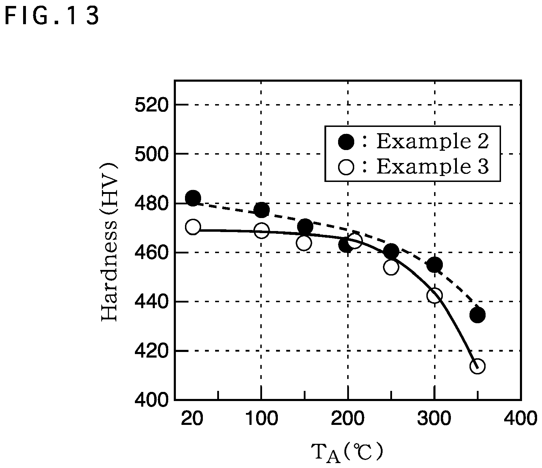

The results shown in Table 3 and Figs. 9 to 13 clearly indicate that the present steel (TRIP-aided dual-phase martensitic steel) makes it possible to increase the retained γ amount by carrying out an isothermal transformation process in a temperature range from Mf to [(Mf)-100°C], that is, from 250°C to 150°C, (see Fig. 9), and that both of the strength-elongation balance and Charpy impact value can be improved (see Figs. 11 and 12), with the hardness being further maintained in a high level (see Fig. 13) .

**[Table 3]**

| | Production condition | | | | | Volume fraction of structure | Retained γ-range carbon concentra tion | Mechanical characteristics | | | | | | | Eval uati on |
|---|---|---|---|---|---|---|---|---|---|---|---|---|---|---|---|
| | Forgin 9 temper ature (°C) | Isothermal transformation process | | Partitioning process | | Retained γ (%) | C_{γo} (%) | Tensile strengt h TS (MPa) | Yield strengt h YS (MPa) | Total elongat ion TEl (%) | Uniform elongat ion UEl (%) | Strengt h-elongat ion balance TSxTEl (GPa%) | Charpy impact absorbi ng value CIAV (J/cm²) | Hard ness (HV) | |
| | | Temperatu re (°C) | Time (Sec) | Temper ature (°C) | Time (Sec) | | | | | | | | | | |
| Exampl e 2-Steel type B (IT-proces s) | 950 | - | - | - | - | 2.4 | 0.42 | 1590 | 1130 | 12.5 | 3.9 | 20 | 108 | 482 | |
| | 950 | 100 | 1000 | - | - | 3.5 | 0.31 | 1582 | 1128 | 14.7 | 4.1 | 23 | 113 | 477 | |
| | 950 | 150 | 1000 | - | - | 4.8 | 0.13 | 1580 | 1114 | 15.8 | 5.2 | 25 | 127 | 471 | ○ |
| | 950 | 200 | 1000 | - | - | 4.6 | 0.10 | 1572 | 1139 | 16.1 | 5.1 | 25 | 124 | 463 | ○ |
| | 950 | 250 | 1000 | - | - | 5.9 | 0.19 | 1518 | 1122 | 17.4 | 5.7 | 26 | 127 | 460 | ○ |
| | 950 | 300 | 1000 | - | - | 5.8 | 0.61 | 1468 | 1155 | 16.8 | 4.6 | 25 | 130 | 455 | |
| | 950 | 350 | 1000 | - | - | 6.6 | 0.75 | 1434 | 1150 | 15.7 | 4.3 | 23 | 135 | 435 | |

| | | | | | | | | | | | | | | | |
|---|---|---|---|---|---|---|---|---|---|---|---|---|---|---|---|
| Evaluation: ○: excellent : not so bad | | | | | | | | | | | | | | | |

### Example 3

In the same manner as in the example 2, the example 3 also examined respective characteristics in the case when the isothermal transformation process temperature (IT-process temperature) was changed, and a sample steel slab (the unit used in Table 1 is mass%, with the balance Fe and incidental impurities) of steel-type A having a component composition shown in Table 1 was produced by a continuous forging process, and the slab was again heated to a range of 1250°C, subjected to a hot-rolling process, and washed with acid, and then subjected to a machining process so that a forging test piece made of a rectangular steel rod having a thickness of 20 mm, a length of 80 mm and a width of 32 mm was produced from a steel rod having a diameter of 32 mm and a length of 80 mm. Then, the test piece was heated at 950°C for one second or more, and subjected to a forging process, and cooled to 430°C at an average cooling rate of 20°C/s, was and then further cooled to an isothermal transformation process temperature shown in Table 2 at an average cooling rate of 20°C/s. At this temperature, an isothermal transformation process (IT-process) was carried out thereon, and the resulting test piece was then cooled to room temperature (without any partitioning process (P-process).

Each of the thus obtained forged members of the steel according to the present invention was measured for its retained γ amount (f_{γ0}), carbon concentration (C_{γ0}), strength-elongation balance (TSxTEl) and Charpy impact absorbing value (CIAV) in the following procedures in the same manner as in example 1, and its hardness was further measured so that the resulting measured values are shown in Table 4, and Figs. 9 to 13 respectively.

The results shown in Table 4 and Figs. 9 to 13 clearly indicate that the present steel (TRIP-aided dual-phase martensitic steel) makes it possible to increase the retained γ amount by carrying out an isothermal transformation process in a temperature range from Mf to [(Mf)-100°C], that is, from 250°C to 150°C, (see Fig. 9), and that both of the strength-elongation balance and Charpy impact value can be improved (see Figs. 11 and 12), with the hardness being further maintained in a high level (see Fig. 13) .

**[Table 4]**

| | Production condition | | | | | Volume fraction of structure | Retained γ-range carbon concentra tion | Mechanical characteristics | | | | | | | Eval uati on |
|---|---|---|---|---|---|---|---|---|---|---|---|---|---|---|---|
| | Forging tempera ture (°C) | Isothermal transformation process | | partitioning process | | Retaine d γ (%) | C_{γo} (%) | Tensile strengt h TS (MPa) | Yield strengt h YS (MPa) | Total elongat ion TEl (%) | Uniform elongat ion (%) | Strengt h-elongat ion balance TSxTEl (GPa%) | Charpy impact absorbi ng value CIAV (J/cm²) | Hardn ess (HV) | |
| | | Temper ature (°C) | Time (Sec) | Tempera ture (°C) | Time (Sec) | | | | | | | | | | |
| Example 3-Steel type A (IT-process ) | 950 | - | - | - | - | 3.5 | 0.77 | 1506 | 1111 | 14.1 | 6.8 | 21 | 90 | 470 | |
| | 950 | 100 | 1000 | - | - | 4.8 | 0.66 | 1510 | 1112 | 14.7 | 6.7 | 22 | 96 | 469 | |
| | 950 | 150 | 1000 | - | - | 6.0 | 0.50 | 1504 | 1091 | 18.0 | 8.8 | 27 | 112 | 464 | ○ |
| | 950 | 200 | 1000 | - | - | 6.0 | 0.43 | 1502 | 1085 | 19.3 | 9.6 | 29 | 118 | 465 | ○ |
| | 950 | 250 | 1000 | - | - | 6.4 | 0.42 | 1486 | 1125 | 18.8 | 9.4 | 28 | 108 | 453 | ○ |
| | 950 | 300 | 1000 | - | - | 5.2 | 0.73 | 1430 | 1147 | 17.0 | 9.1 | 24 | 112 | 442 | |
| | 950 | 350 | 1000 | - | - | 8.6 | 0.85 | 1405 | 1133 | 14.2 | 6.8 | 20 | 120 | 413 | |

| | | | | | | | | | | | | | | | |
|---|---|---|---|---|---|---|---|---|---|---|---|---|---|---|---|
| Evaluation: ○: excellent : not so bad | | | | | | | | | | | | | | | |

### Example 4

A slab made of the steel according to the present invention was again heated to a temperature of 1250°C, subjected to a hot-rolling process, washed with acid, subjected to a hot-rolling process at 950°C, cooled to 430°C at an average cooling rate of 50°C/s, and successively cooled to a temperature of 200°C at an average cooling rate of 20°C/s, and then kept at that temperature for 1000 seconds so that an isothermal transformation process (IT-process) was carried out thereon, and the resulting material was then cooled to room temperature. Thereafter, this was maintained at 300°C for 1000 seconds to carrying out a partitioning process (P-process) thereon, and this was further cooled to room temperature to be subjected to a trimming process, a surface treatment (in which oxidation scales were removed by a horning machine), a cutting process, an end-face machining process and the like, so that a connecting rod for an engine was obtained.

### Example 5

A raw steel material made of the steel according to the present invention was cut into a predetermined length, roughly warm-forged, heated to a temperature of 1200°C, and held at that temperature for one second or more, and then subjected to a hot forging process into a shape having an outer diameter of 32 mm in the main body portion with many bosses of *φ* 18 mm. Then the resulting material was cooled to 200°C at an average cooling rate of 20°C/s, and then held at that temperature for 1000 seconds to carrying out a partitioning process (P-process) thereon. Thereafter, this was cooled to room temperature, and a pipe hole having an inner diameter of 9 mm was bored in the pipe axis direction by a gun drill machining method, and outer threads of M16 type were formed on each of the outer circumferences of the bosses, with seat faces being formed on the tops of the bosses, and a machining process for bores or the like of a branch hole with *φ* 3 mm was carried out in the center of each of the bosses so that a common rail was obtained.

Each of the connecting rod for an engine described in the example 4 and the common rail described in the example 5 had ultrahigh strength and also had superior strength-elongation balance and Charpy impact value, it was thus recognized that small-size and light weight of parts were achieved.

### Industrial Applicability

In order to improve a strength-elongation balance and the Charpy impact value, the present invention carries out an isothermal transformation process (IT-process) after heating to a γ-range as heating processing conditions, so that a metallographic structure having a micro-structure composed of a soft lath martensitic structure and a hard lath martensitic structure as its matrix phase can be obtained. Further, by carrying out a partitioning process (P-process) after the isothermal transformation process (IT-process), the carbon concentration can be enhanced as high as that in a quenching process (Q-process)-partitioning process (P-process). Additionally, after heating to the γ-range, by carrying out a plastic-working process (hot working) at that temperature range, it is possible to increase the amount of retained austenite and also to obtain a TRIP-aided dual-phase martensitic steel having superior strength-elongation balance and Charpy impact value; thus, it becomes possible to provide a processed product made of an ultrahigh-strength steel and an ultrahigh-strength forged product having superior strength-elongation balance and Charpy impact value, regardless of any heating temperature and reduction ratio (such as forge reduction ratio and elongation reduction ratio), without causing any problems during a high-temperature forging process and a low-temperature forging process.

### Reference Signs List

- 1: soft martensite,
- 2: hard martensite,
- 3: retained austenite,
- 4: cementite

## Claims

1. A TRIP-aided dual-phase martensitic steel comprising:
0.1-0.7 mass% of C, 0.5-2.5 mass% of Si, 0.5-3.0 mass% of Mn, 0.5-2.0 mass% of Cr, 0.5 mass% or less, including 0 mass%, of Mo, 0.04-2.5 mass% of Al and the balance consisting of Fe and incidental impurities, **characterized in that**
the TRIP-aided dual-phase martensitic steel further including 0.2 mass% or less of Nb, 2.0 mass% or less, including 0 mass%, of Ni, 0.005 mass% or less, including 0 mass%, of B and 0.05 mass% or less, including 0 mass%, of Ti, **in that**
a metallographic structure of the steel has a volume fraction of a soft lath martensitic structure (1) forming a matrix phase structure of 30 to 85%, a volume fraction of a hard lath martensitic structure (2) of 10 to 70%, and a volume fraction of a retained austenite (3) of 1 to 10%, and **in that**
the steel is obtained by heating a raw steel material of the steel to a γ-range, and rapidly cooling the heated material to a temperature, Ms + 10 to 30°C, slightly above a martensite transformation starting temperature Ms at a cooling rate of 10 to 100°C/s, and then performing an isothermal transformation process on the cooled material in a temperature range of Mf to Mf-100°C.

2. The TRIP-aided dual-phase martensitic steel according to claim 1, wherein after the isothermal transformation process, a partitioning process is further carried out at a temperature comprised between 200°C and 400°C and during a time of 1000 seconds.

3. The TRIP-aided dual-phase martensitic steel according to claim 1 or 2, wherein after the heating treatment to a γ-range, a plastic-working process is carried out at the temperature range.

4. An ultrahigh-strength-steel processed product, wherein the processed product is made of a TRIP-aided dual-phase martensitic steel according to any one of claims 1 to 3.

5. The ultrahigh-strength-steel processed product according to claim 4, wherein the processed product is a forged product.

6. The ultrahigh-strength-steel processed product according to claim 5, wherein the processed product is a connecting rod for an engine, an isokinetic joint, or a common rail for use in diesel engines.

## Patentansprüche

1. TRIP-gestützter, zweiphasiger martensitischer Stahl, umfassend:
0,1% - 0,7 Masseprozent C, 0,5% - 2,5 Masseprozent Si, 0,5% - 3,0 Masseprozent Mn, 0,5% - 2,0 Masseprozent Cr, 0,5 Masseprozent oder weniger, einschließlich 0 Masseprozent Mo, 0,04% - 2,5 Masseprozent Al, und der Rest bestehend aus Fe und zufälligen Verunreinigungen, **dadurch gekennzeichnet, dass**
der TRIP-gestützte, zweiphasige martensitische Stahl ferner einschließt 0,2 Masseprozent oder weniger Nb, 2,0 Masseprozent oder weniger, einschließlich 0 Masseprozent Ni, 0,005 Masseprozent oder weniger, einschließlich 0 Masseprozent B und 0,05 Masseprozent oder weniger, einschließlich 0 Masseprozent Ti, darin dass
eine metallographische Struktur des Stahls einen Volumenanteil einer weichen Struktur von Lattenmartensit (1) aufweist, die eine Matrixphasenstruktur von 30% bis 85% bildet, einen Volumenanteil einer harten Struktur von Lattenmartensit (2) von 10% bis 70% und einen Volumenanteil von Abschreckaustenit (3) von 1% bis 10%, und darin dass
der Stahl erhalten wird durch Erhitzen eines Ausgangsmaterials des Stahls bis zu einem γ-Bereich und rasches Abkühlen des erhitzten Materials bis zu einer Temperatur, Ms + 10 bis 30°C, geringfügig oberhalb einer Ausgangstemperatur der Martensitumwandlung Ms bei einer Kühlgeschwindigkeit von 10 bis 100°C/s, und anschließendes Ausführen eines isothermen Umwandlungsprozesses an dem gekühlten Material in einem Temperaturbereich von Mf bis Mf-100°C.

2. TRIP-gestützter, zweiphasiger martensitischer Stahl nach Anspruch 1, wobei nach dem isothermen Umwandlungsprozess ferner ein Trennprozess bei einer zwischen 200 und 400°C umfassenden Temperatur und über eine Dauer von 1.000 Sekunden ausgeführt wird.

3. TRIP-gestützter, zweiphasiger martensitischer Stahl nach Anspruch 1 oder 2, wobei nach der Wärmebehandlung im γ-Bereich bei dem Temperaturbereich ein Prozess der plastischen Verformung ausgeführt wird.

4. Ultrahochfestes Stahl-Verarbeitungsprodukt, wobei das Verarbeitungsprodukt aus einem TRIP-gestützten, zweiphasigen martensitischen Stahl nach einem der Ansprüche 1 bis 3 hergestellt ist.

5. Ultrahochfestes Stahl-Verarbeitungsprodukt nach Anspruch 4, wobei das Verarbeitungsprodukt ein geschmiedetes Produkt ist.

6. Ultrahochfestes Stahl-Verarbeitungsprodukt nach Anspruch 5, wobei das Verarbeitungsprodukt eine Pleuelstange für einen Motor, ein isokinetisches Gelenk oder eine Common-Rail zur Verwendung in Dieselmotoren ist.

## Revendications

1. Acier martensitique biphasé assisté par TRIP comprenant :
0,1 à 0,7% en masse de C, 0,5 à 2,5% en masse de Si, 0,5 à 3,0% en masse de Mn, 0,5 à 2,0% en masse de Cr, 0,5% en masse ou moins, incluant 0% en masse, de Mo, 0,04 à 2,5% en masse de Al et le reste étant constitué de Fe et d'impuretés accidentelles, **caractérisé en ce que**
l'acier martensitique biphasé assisté par TRIP inclut en outre 0,2% en masse ou moins de Nb, 2,0% en masse ou moins, incluant 0% en masse, de Ni, 0,005% en masse ou moins, incluant 0% en masse, de B et 0,05% en masse ou moins, incluant 0% en masse, de Ti, **en ce que**
une structure métallographique de l'acier a une fraction volumique d'une structure martensitique à lattes molles (1) formant une structure de phase matricielle de 30 à 85%, une fraction volumique d'une structure martensitique à lattes dures (2) de 10 à 70%, et une fraction volumique d'une austénite retenue (3) de 1 à 10%, et **en ce que**
l'acier est obtenu en chauffant un matériau en acier brut de l'acier jusqu'à une plage γ, et en refroidissant rapidement le matériau chauffé à une température, Ms +10 à 30°C, légèrement au-dessus d'une température de départ de transformation de martensite Ms à une vitesse de refroidissement de 10 à 100°C/s, et puis en effectuant un processus de transformation isotherme sur le matériau refroidi dans une plage de température de Mf à Mf-100°C.

2. Acier martensitique biphasé assisté par TRIP selon la revendication 1, dans lequel après le processus de transformation isotherme, un processus de partitionnement est en outre effectué à une température comprise entre 200°C et 400°C et pendant une durée de 1000 secondes.

3. Acier martensitique biphasé assisté par TRIP selon la revendication 1 ou 2, dans lequel après le traitement de chauffage jusqu'à une plage γ, un processus de travail plastique est effectué dans la plage de température.

4. Produit traité en acier à ultra haute résistance, dans lequel le produit traité est fait d'un acier martensitique biphasé assisté par TRIP selon l'une quelconque des revendications 1 à 3.

5. Produit traité en acier à ultra haute résistance selon la revendication 4, dans lequel le produit traité est un produit forgé.

6. Produit traité en acier à ultra haute résistance selon la revendication 5, dans lequel le produit traité est une bielle pour un moteur, un joint isocinétique, ou une rampe commune pour une utilisation dans des moteurs diesel.
